# EUROPEAN PATENT SPECIFICATION

(11) **EP 1 750 362 B1**
(45) Date of publication and mention of the grant of the patent: **24.08.2016**
(21) Application number: 06116278.0
(22) Date of filing: 29.06.2006
(51) Int. Cl.: H02P 6/08, H02P 27/08, H02M 1/42, H02M 7/217

(54) **DC power supply device for an air conditioner**
Gleichstromversorgung für eine Klima-Anlage
Alimentation de puissance courant continu pour un climatiseur

(30) Priority: 15.07.2005 JP 2005206437
(43) Date of publication of application: 07.02.2007
(73) Proprietor: Panasonic Corporation, Kadoma-shi Osaka 571-8501 (JP)
(72) Inventor: Kyogoku, Akihiro Matsushita Elec. Ind.Co.,Ltd., Shiromi 1-chome,Chuo-ku, Osaka 540-6319 (JP)
(74) Representative: Eisenführ Speiser

(56) References cited:
- EP-A- 0 866 284
- EP-A- 1 298 782
- JP-A- 09 070 178
- JP-A- 11 316 042
- JP-A- 2006 006 046
- US-A- 5 628 202
- US-A- 5 915 070

## Description

### FIELD OF THE INVENTION

The present invention relates to technology for converting an AC voltage from an AC power supply to a predetermined DC voltage that is supplied to a load, and relates more particularly to technology for a DC power supply device for an air conditioner.

### BACKROUND OF THE INVENTION

US5915070A discloses a motor driving apparatus which PWM-controls a DC voltage from a rectifying unit according to a rotation speed setting information, and drives a motor by voltage pulse chooped by PWM. The rectifying unit is controlled so that a full-wave rectification is performed when the motor runs at a rotation speed below a prescribed rotation speed and a voltage-doubler rectification is performed when the motor runs at a rotation speed above the prescribed rotation speed. On the other hand, in case a motor drives a compressor of an air-conditioning system, the rectifying unit is controlled so that the full-wave rectification is performed when the air-conditioning system is a cooling operation and the voltage-doubler rectification is performed when the air-conditioning system is a heating operation. When the rectifying unit is controlled for the full-wave rectification, even if a width of voltage pulse given to the motor is decreased, a voltage value of the voltage pulse is half as compared with the voltage-doubler rectification. Hence, since a motor current is small and its current variation is also small, a hysteresis loop due to a variation in magnetic flux becomes small and an iron loss is reduced. When the rectifying unit is controlled for the voltage-doubler rectification, since a DC voltage which is the double of that of the full-wave rectification is supplied, the motor capacity can be increased.

JPH11316042A attempts to reduce power loss of inverter by increasing DC output voltage at the time of heating when the outdoor temperature is low thereby having a refrigerant condensation quantity for keeping the operating current lower than a limit level even when a compressor motor is operated at high r.p.m. The solution proposed by JPH11316042A involves a switching element which is turned on/off according to the waveform of a voltage Es produced by full-wave rectifying a sine wave. When the detection output from an input current detector exceeds a specified level, a microcomputer delivers a trigger signal for driving the switching element to start switching operation thereof. When the motor load increases and the duty factor of the switching element in an inverter becomes 100%, the switching element is turned on/off such that the DC voltage Ed of a capacitor has an arbitrary level. Consequently, the motor can be operated continuously at a high r.p.m. required for heavy motor load due to heavy heating load caused by low outdoor temperature, for example.

EP1298782 discloses an inverter air-conditioner including a bridge rectifying circuit that rectifies an ac from an ac power supply, a reactor coupled between the ac power supply and a first end of an ac input to the bridge rectifying circuit, a capacitor coupled via a bi-directional switch between a second end of the ac input and a de output terminal, a smoothing capacitor, zero-cross detecting means, bi-directional switch driving signal generating means, bi-directional switch driving means, compressor driving means and a compressor.

Japanese Unexamined Patent Appl. Pub. 2004-72806 teaches a DC power supply device for converting voltage from an AC power supply to a DC voltage supplied to load where the DC power supply device detects the zero cross of the AC power supply and improves the power factor to produce a high DC output voltage by inserting a reactor to short the AC power supply for a predetermined time near the zero cross of the AC power supply.

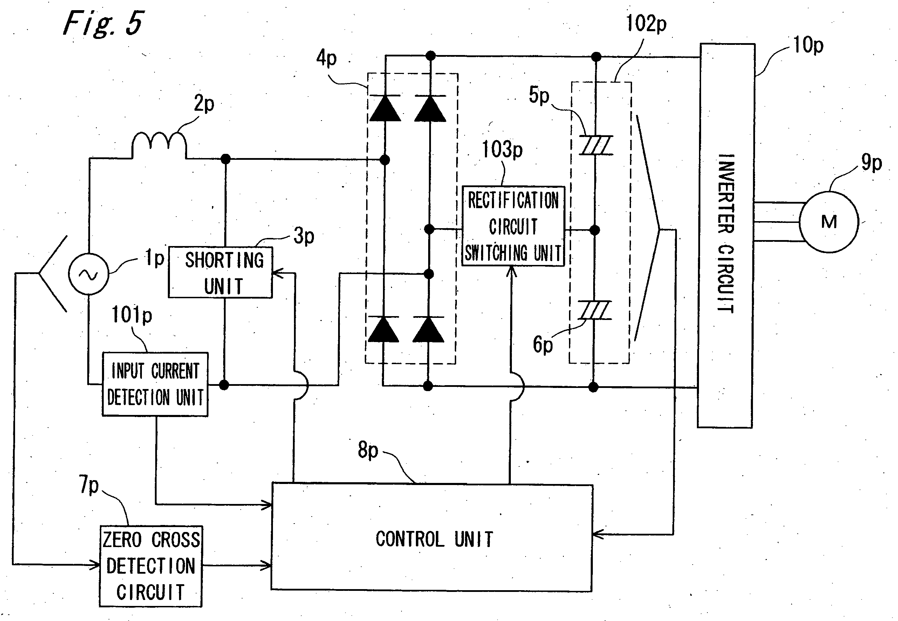

FIG. 5 is a schematic diagram of the conventional DC power supply device described in Japanese Unexamined Patent Appl. Pub. 2004-72806. The conventional DC power supply device shown in FIG. 5 is feedback controlled to maintain the DC voltage equal to a predetermined target voltage, therefore holds the DC voltage required to drive the compressor 9p substantially constant even when the supply voltage from the AC power supply 1 p fluctuates, and therefore affords an extremely stable system.

In general, the conventional DC power supply device of the type shown in FIG. 5 suffers from increased loss in the shorting unit 3p as the target voltage setting rises, and the temperature of the shorting unit 3p therefore rises. More particularly, when the supply voltage of the AC power supply 1 p drops in a DC power supply device that uses feedback control based on the DC voltage, the shorting time of the shorting unit 3p increases in order to pull the DC voltage up to the target voltage, and the shorting unit 3p therefore tends to be subject to an extreme increase in temperature.

As a result, the highest target voltage that can be set is limited by the maximum operating temperature of the DC power supply device. In an air conditioner that can be used for both heating and cooling, the DC voltage must therefore be set to allow for operation in the air conditioning mode when the outdoor temperature is high.

On the other hand, the outdoor temperature is lower when the air conditioner is used for heating than when it is used for cooling. The induction voltage of a compressor motor that uses a common magnet made of rare earth or ferrite materials tends to increase as the temperature decreases. Assuming the compressor is driven at the same speed, the compressor therefore requires a higher DC voltage during cooling mode operation.

As a result, a problem with the DC power supply device for a conventional air conditioner in which the threshold value is determined by the compressor speed and input current is that the temperature increase in the DC power supply device during cooling mode operation limits the voltage boosting performance of the DC power supply device in the heating mode, that is, limits the high speed performance of the compressor.

To solve this problem, an object of the present invention is to provide a DC power supply device for an air conditioner that can maximally supply the DC voltage required to drive the compressor at the speed required by the heating or cooling operating mode of the air conditioner.

### DISCLOSURE OF THE INVENTION

To achieve this object, a DC power supply device for an air conditioner according to the present invention, as set forth in claim 1, has a direct current supply means for converting an AC voltage from an AC power supply to a predetermined DC voltage and supplying the DC voltage to a load of the air conditioner; and a control means for controlling the DC supply means based on a comparison of the DC voltage and a predetermined target voltage. When operating in a heating mode, the target voltage is set to a level greater than or equal to the target voltage that is set when operating in a cooling mode.

A DC power supply device for an air conditioner according to another aspect of the invention has a direct current supply means for converting an AC voltage from an AC power supply to a predetermined DC voltage and supplying the DC voltage to a load of the air conditioner; a control means for controlling the DC supply means based on a comparison of the DC voltage and a predetermined target voltage; and a temperature detection means (14) for detecting an ambient temperature of the air conditioner; wherein the target voltage increases as the ambient temperature decreases.

By setting the target voltage used in the heating mode higher than the target voltage used in the cooling mode, the DC power supply device for an air conditioner according to the present invention affords greater tolerance for the DC power supply device temperature to increase when operating in the cooling mode when the outdoor temperature is high.

Furthermore, by setting the target voltage high in the heating mode when the outdoor temperature is low, the voltage boosting performance can be extracted to the maximum' temperature limit of the shorting element while also allowing for an increase in the induction voltage of the compressor motor.

The effect of the invention is particularly significant in a case where the motor, having a large number of windings to provide a high induction voltage, is driven at a high DC voltage for energy conservation.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a schematic diagram of the DC power supply device for an air conditioner according to a first embodiment of the invention.
FIG. 2 is a graph describing the relationship between compressor speed and target voltage in the DC power supply device for an air conditioner according to a first embodiment of the invention.
FIG. 3 is a schematic diagram of the DC power supply device for an air conditioner according to a second embodiment of the invention.
FIG. 4 is a graph describing the relationship between compressor speed and target voltage in the DC power supply device for an air conditioner according to a second embodiment of the invention.
FIG. 5 is a schematic diagram of a conventional DC power supply device.

### DETAILED DESCRIPTION OF THE PREFERRED EMBODIMENTS

In a DC power supply device for an air conditioner that rectifies the AC voltage from an AC power supply to a predetermined DC voltage supplied to a load according to a first aspect of the invention, the DC power supply device can be used to the maximum operating temperature of the DC power supply device in the heating mode, and the maximum compressor speed in the heating mode can be increased, by applying feedback control so that the DC voltage is equal to a target voltage that is predetermined based on the speed of the compressor and the operating mode of the air conditioner, and setting the target voltage for heating mode operation higher than the target voltage for cooling mode operation.

In a DC power supply device for an air conditioner that rectifies the AC voltage from an AC power supply to a predetermined DC voltage supplied to a load according to a second aspect of the invention, the DC power supply device can extract maximum high speed efficiency according to the operating environment of the air conditioner by applying feedback control so that the DC voltage is equal to a target voltage that is predetermined based on the speed of the compressor and the ambient temperature, and increasing the target voltage setting as the ambient temperature of the DC power supply device decreases.

Preferred embodiments of the present invention are described below with reference to the accompanying figures. The present invention is obviously not limited to these embodiments.

### First embodiment

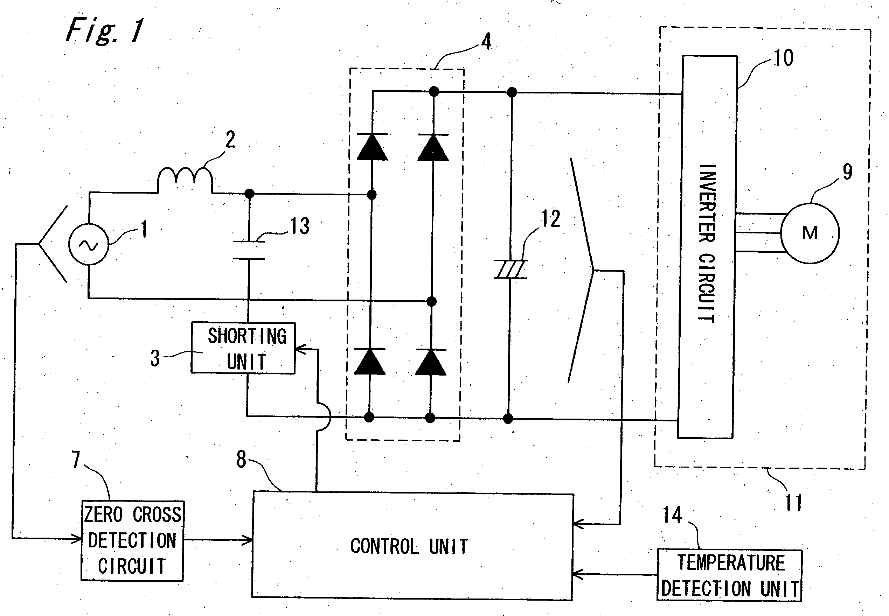

FIG. 1 is a schematic diagram of a DC power supply device according to a first embodiment of the invention. As shown in FIG. 1, a DC power supply device according to this embodiment of the invention has a reactor 2 that has one end connected to the AC power supply 1 and inductively charges and discharges the AC voltage from the AC power supply 1, a rectification circuit 4 that is connected to the other end of the reactor 2 and rectifies the output voltage of the reactor 2, a smoothing capacitor 12 that is connected to both DC output nodes of the rectification circuit 4 for generating a DC voltage from the rectified voltage, a shorting unit 3 and capacitor 13 that are connected between the other end of the reactor 2 and the negative output node of the rectification circuit 4, a zero cross detection circuit 7 for detecting the zero cross of the AC voltage from the AC power supply 1, and a control unit 8 for controlling the shorting unit 3. This DC power supply device supplies the resulting DC voltage to a load 11 comprising a compressor 9 (compressor drive motor 9), and an inverter circuit 10 for driving the compressor 9. The reactor 2, rectification circuit 4, smoothing capacitor 12, and shorting unit 3 constitute the DC supply unit.

The DC voltages from both ends of the smoothing capacitor 12 are input to the control unit 8, which generates a drive signal for driving the shorting unit 3 triggered by the zero cross detected by the zero cross detection circuit 7, and shorts and opens the shorting unit 3 at least once every half cycle of the power supply. The control unit 8 determines the target voltage of the DC power supply device from the speed of the compressor 9 and the outdoor temperature detected by a temperature detection unit 14 disposed in the air conditioner, and applies feedback control adjusting the shorting frequency, shorting time, and shorting position of the shorting unit 3 so that the DC voltage supplied to the inverter circuit 10 is held at a predetermined voltage (target voltage). More specifically, the control unit 8 compares the DC voltage and the predetermined target voltage to control the DC supply unit, and more particularly the shorting unit 3.

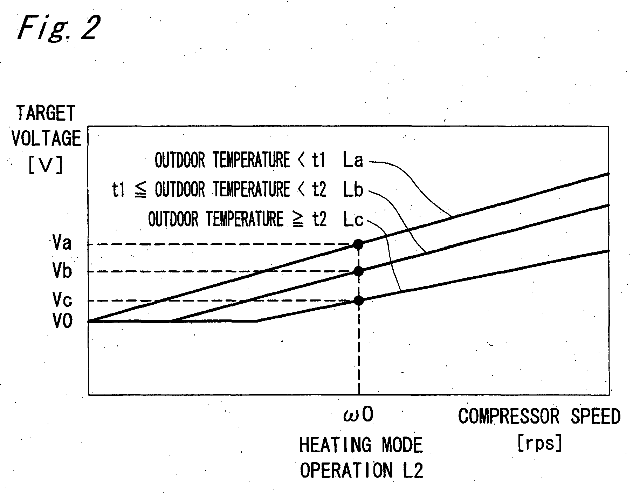

FIG. 2 describes the relationship between compressor speed and the target voltage in the DC power supply device for an air conditioner according to this first embodiment of the invention. The target voltages are preset and stored in memory. These target voltages are determined as a function of the compressor 9 speed and the outdoor temperature. When the outdoor temperature is less than t1, the target voltage is set to a voltage Va on the line denoted La in FIG. 2. When the outdoor temperature is greater than or equal to t1 and less than t2, the target voltage is set to a voltage Vb on the line denoted Lb in FIG. 2. When the outdoor temperature is greater than or equal to t2, the target voltage is set to a voltage Vc on the line denoted Lc in FIG. 2. Note that t1 < t2, and Va > Vb > Vc. As a result, the target voltage is set higher as the outdoor temperature decreases and the compressor speed remains constant. The outdoor temperature corresponds to the ambient temperature of the outdoor unit (not shown in the figure) of the air conditioner or the ambient temperature of the DC power supply device.

Air conditioners are generally used over a wide range of temperatures from below freezing to over 40 degC. Because the tolerance for a temperature increase in the DC power supply device rises as the ambient temperature falls, the voltage boosting performance of the DC power supply device can always be used to maximum efficiency according to the operating conditions of the air conditioner assuming the same operating mode and same compressor 9 speed by setting the target voltage higher as the ambient temperature (outdoor temperature) drops.

As shown in FIG. 2, when the compressor 9 speed is relatively low and a particularly high DC voltage is not required to drive the compressor 9 motor, the target voltage of the DC power supply device is set to a constant voltage V0 irrespective of the outdoor temperature.

The same effect can obviously be achieved by setting the target voltage in combination with the operating mode (operating state) instead of only the compressor 9 speed and ambient temperature.

### Second embodiment

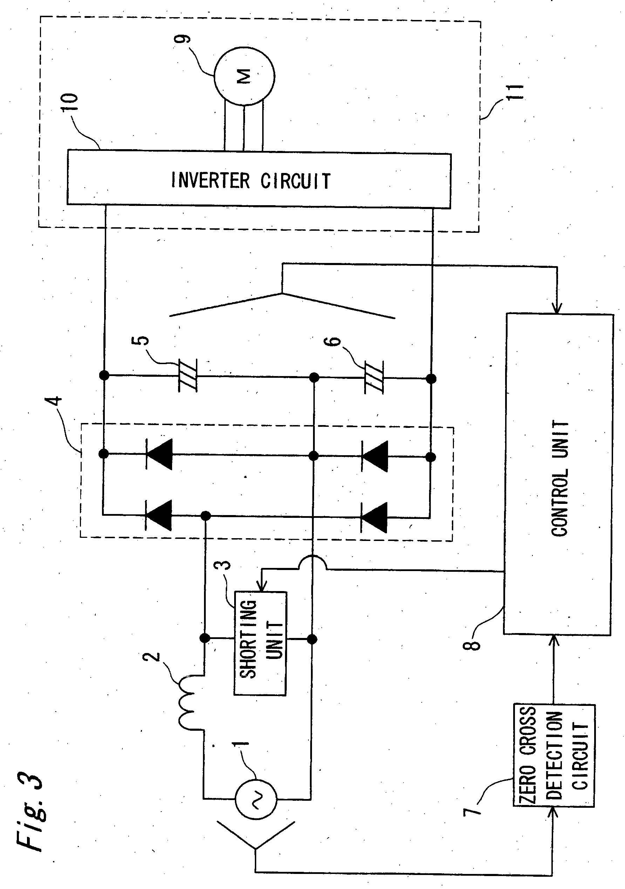

FIG. 3 is a schematic diagram of a DC power supply device according to a second embodiment of the invention. As shown in FIG. 3, a DC power supply device according to this embodiment of the invention has a reactor 2 that has one end connected to the AC power supply 1 and inductively charges and discharges the AC voltage from the AC power supply 1, a shorting unit 3 for shorting the AC power supply 1 through the reactor 2, a rectification circuit 4 that is connected to the other end of the reactor 2 and rectifies the output voltage of the reactor 2, a capacitor 5 and a capacitor 6 connected in series between the DC output nodes of the rectification circuit 4 for generating a DC voltage from the rectified voltage, a zero cross detection circuit 7 for detecting the zero cross of the AC voltage from the AC power supply 1, and a control unit 8 for controlling the shorting unit 3. This DC power supply device supplies the resulting DC voltage to a load 11 comprising a compressor 9 (compressor drive motor 9), and an inverter circuit 10 for driving the compressor 9. The reactor 2, rectification circuit 4, capacitor 5, capacitor 6, and shorting unit 3 constitute the DC supply unit.

The control unit 8 is a microcomputer, for example, that takes the DC voltage input between the positive side of capacitor 5 and the negative side of capacitor 6, generates a drive signal for driving the shorting unit 3 triggered by the zero cross detected by the zero cross detection circuit 7, and shorts and opens the shorting unit 3 at least once every half cycle of the power supply. The control unit 8 determines the target voltage of the DC power supply device from the speed of the compressor 9 and the operating mode (state) of the air conditioner, and applies feedback control adjusting the shorting frequency, shorting time, and shorting position of the shorting unit 3 so that the DC voltage supplied to the inverter circuit 10 is held at a predetermined voltage (target voltage). More specifically, the control unit 8 compares the DC voltage and the predetermined target voltage to control the DC supply unit, and more particularly the shorting unit 3.

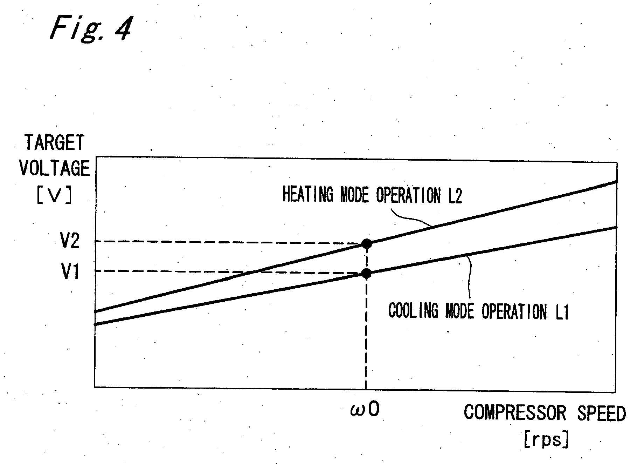

FIG. 4 describes the relationship between compressor speed and the target voltage in the DC power supply device for an air conditioner according to this second embodiment-of the invention. The target voltage of the DC power supply device differs according to the operating mode (state) of the air conditioner, that is, whether the air conditioner is in the cooling mode or the heating mode. As shown in FIG. 4, when the compressor 9 speed is 600, voltage V1 on line L1 in FIG. 4 is set as the target voltage when operating in the cooling mode, and voltage V2 on line L2 (> L1) in FIG. 4 is set as the target voltage when operating in the heating mode.

During the heating mode the expected outdoor temperature is lower than when operating in the cooling mode, there is more tolerance for the DC power supply device temperature to increase than when in the cooling mode, and the target voltage used in the heating mode can therefore be set higher in accordance with this temperature difference.

The induction voltage of a compressor motor that uses a common magnet made of rare earth or ferrite materials tends to increase as the temperature decreases. As a result, a DC power supply device that can minimize the temperature increase in the shorting unit 3, for example, while maintaining the minimum DC voltage required to drive the compressor 9 can be provided by setting the target voltage higher in the heating mode than in the cooling mode assuming a constant compressor 9 speed.

Because the induction voltage of the compressor 9 increases as the temperature decreases, the DC voltage required by the load conditions of the air conditioner can always be supplied to the load 11 by setting the target voltage of the DC power supply device higher as the ambient temperature decreases.

The target voltage is selected according to the compressor 9 speed and operating mode of the air conditioner in this second embodiment of the invention, but the same effect can be achieved by using the input current from the AC power supply 1 or the motor current of the compressor 9 instead of the speed of the compressor 9.

By setting the target voltage used in the heating mode higher than the target voltage used in the cooling mode, the DC power supply device for an air conditioner according to the present invention affords greater tolerance for the DC power supply device temperature to increase when operating in the cooling mode when the outdoor temperature is high.

Furthermore, by setting the target voltage high in the heating mode when the outdoor temperature is low, the voltage boosting performance can be extracted to the maximum temperature limit of the shorting element while also allowing for an increase in the induction voltage of the compressor motor.

The effect of the invention is particularly pronounced when the induction voltage of the motor rises and it is necessary to drive the motor at a high DC voltage as a result of wrapping the compressor motor for energy conservation.

A DC power supply device for an air conditioner according to the present invention can raise the voltage of the DC power supply device to the maximum possible output voltage according to the temperature of the operating environment, and the DC power supply device of this invention can therefore be used in a variety of home appliance applications having a motor load, including heat pump type hot water heaters, refrigerators, and washing machines.

It will be obvious to one with ordinary skill in the related art that these embodiments are described by way of example only, the invention is not limited to these embodiments, and the technology of this invention can be easily modified in many ways without departing from the scope of the accompanying claims.

## Claims

1. A direct current power supply device for an air conditioner driven by a compressor motor under a heating mode or a cooling mode, comprising:
a direct current supply means (2, 4, 12, 3; 2, 4, 5, 6, 3) for converting an AC voltage from an AC power supply (1) to a predetermined DC voltage and supplying the DC voltage to a load (11) of the air conditioner, wherein said load (11) comprises the compressor motor; and
a control means (8) for controlling the DC supply means based on a comparison of the DC voltage and a predetermined target voltage so that the DC voltage is held at the target voltage, said target voltage being variable and being supplied to the load;
wherein
(a) the target voltage is set to gradually increase, for both of the heating mode and the cooling mode, as a rotation speed of the compressor motor increase, and
(b) when operating under the heating mode, the target voltage is set to a level greater than the target voltage that is set under the cooling mode, provided that the rotational speed of the compressor motor is the same.

2. The direct current power supply device for an air conditioner described in claim 1, further comprising a zero cross detection circuit (7) for detecting the zero cross of the AC voltage;
wherein the control means applies control based on the zero cross.

3. The direct current power supply device for an air conditioner described in claim 1, wherein the DC supply means comprises:
a reactor (2) having one end connected to the AC power supply;
a rectification circuit (4) connected to the other end of the reactor;
capacitors (12; 5, 6) connected to both DC output nodes of the rectification circuit for generating the DC voltage; and
a shorting means (3) connected between the other end of the reactor and the negative output node of the rectification circuit.

4. The direct current power supply device for an air conditioner described in claim 3, wherein the control means controls the shorting means.

## Patentansprüche

1. Gleichstromversorgungsvorrichtung für eine Klimaanlage, die durch einen Verdichtermotor in einem Heizmodus oder einem Kühlmodus angetrieben wird, umfassend:
ein Gleichstromversorgungsmittel (2, 4, 12, 3; 2, 4, 5, 6, 3) zum Umwandeln einer Wechselspannung von einer Wechselstromversorgung (1) in eine vorbestimmte Gleichspannung und zum Anlegen der Gleichspannung an eine Last (11) der Klimaanlage, wobei die Last (11) den Verdichtermotor umfasst, und
ein Steuermittel (8) zum Steuern des Gleichstromversorgungsmittels basierend auf einem Vergleich der Gleichspannung und einer vorbestimmten Zielspannung, so dass die Gleichspannung auf der Zielspannung gehalten wird, wobei die Zielspannung variabel ist und an die Last angelegt wird;
wobei
(a) die Zielspannung eingestellt ist, graduell, für beide Modi, den Heizmodus und den Kühlmodus, anzusteigen, wenn eine Rotationsgeschwindigkeit des Verdichtermotors steigt, und
(b) wenn im Heizmodus betrieben, die Zielspannung auf einen Pegel eingestellt ist, der größer ist als die Zielspannung, die im Kühlmodus eingestellt ist, vorausgesetzt, dass die Rotationsgeschwindigkeit des Verdichtermotors dieselbe ist.

2. Gleichstromversorgungsvorrichtung für eine Klimaanlage beschrieben in Anspruch 1, ferner umfassend eine Nulldurchgangserfassungsschaltung (7) zum Erfassen des Nulldurchgangs der Wechselspannung;
wobei das Steuermittel eine Steuerung basierend auf dem Nulldurchgang ausführt.

3. Gleichstromversorgungsvorrichtung für eine Klimaanlage beschrieben in Anspruch 1, wobei das Gleichstromversorgungsmittel umfasst:
einen Reaktor (2), dessen eines Ende mit der Wechselstromversorgung verbunden ist;
eine Gleichrichterschaltung (4), die mit dem anderen Ende des Reaktors verbunden ist;
Kondensatoren (12; 5, 6), die mit beiden Gleichstromausgangsknoten der Gleichrichterschaltung zum Generieren der Gleichspannung verbunden sind; und
ein Kurzschlussmittel (3), das zwischen das andere Ende des Reaktors und den negativen Ausgangsknoten der Gleichrichterschaltung geschaltet ist.

4. Gleichstromversorgungsvorrichtung für eine Klimaanlage beschrieben in Anspruch 3, wobei das Steuermittel das Kurzschlussmittel steuert.

## Revendications

1. Dispositif d'alimentation en courant continu pour un appareil de conditionnement d'air qui est entraîné par un moteur de compresseur dans un mode de chauffage ou un mode de refroidissement, comprenant:
un moyen d'alimentation en courant continu (2, 4, 12, 3; 2, 4, 5, 6, 3) destiné à convertir une tension alternative provenant d'une alimentation en courant alternatif (1) en une tension continue prédéterminée et à appliquer la tension continue à une charge (11) de l'appareil de conditionnement d'air, dans lequel ladite charge (11) comprend le moteur de compresseur, et
un moyen de commande (8) destiné à commander le moyen d'alimentation en courant continu sur la base d'une comparaison entre la tension continue et une tension cible prédéterminée de sorte que la tension continue est maintenue à la tension cible, ladite tension cible étant variable et étant appliquée à la charge;
dans lequel
(a) la tension cible est réglée de manière à augmenter graduellement, pour les deux modes, le mode de chauffage et le mode de refroidissement, lorsqu'une vitesse de rotation du moteur de compresseur augmente, et,
(b) lors du fonctionnement dans le mode de chauffage, la tension cible est réglée à un niveau supérieur à la tension cible qui est réglée en mode de refroidissement, à condition que la vitesse de rotation du moteur de compresseur soit la même.

2. Dispositif d'alimentation en courant continu pour un appareil de conditionnement d'air, tel que décrit dans la revendication 1, comprenant en outre un circuit de détection de passage par zéro (7) destiné à détecter le passage par zéro de la tension alternative;
dans lequel le moyen de commande met en oeuvre une commande sur la base du passage par zéro.

3. Dispositif d'alimentation en courant continu pour un appareil de conditionnement d'air, tel que décrit dans la revendication 1, dans lequel le moyen d'alimentation en courant continu comprend:
un réacteur (2) dont une extrémité est reliée à l'alimentation en courant alternatif;
un circuit redresseur (4) qui est relié à l'autre extrémité du réacteur;
des condensateurs (12; 5, 6) qui sont reliés aux deux noeuds de sortie de courant continu du circuit redresseur pour générer la tension continue; et
un moyen de court-circuit (3) qui est monté entre l'autre extrémité du réacteur et le noeud de sortie négatif du circuit redresseur.

4. Dispositif d'alimentation en courant continu pour un appareil de conditionnement d'air, tel que décrit dans la revendication 3, dans lequel le moyen de commande commande ledit moyen de court-circuit.
